# EUROPÄISCHE PATENTSCHRIFT

(11) **EP 1 279 142 B1**
(45) Veröffentlichungstag und Bekanntmachung des Hinweises auf die Patenterteilung: **28.07.2004**
(21) Anmeldenummer: 01909745.0
(22) Anmeldetag: 13.02.2001
(51) Int. Cl.: G06K 19/077

(54) **TRANSPONDER-VORRICHTUNG ZUR IDENTIFIKATION VON OBJEKTEN GEGENÜBER EINRICHTUNGEN**
TRANSPONDER DEVICE FOR IDENTIFYING OBJECTS IN RELATION TO DEVICES
DISPOSITIF TRANSPONDEUR DESTINE A L'IDENTIFICATION D'OBJETS PAR RAPPORT A DES INSTALLATIONS

(30) Priorität: 15.02.2000 DE 10006816
(43) Veröffentlichungstag der Anmeldung: 29.01.2003
(73) Patentinhaber: SOKYMAT ID COMPONENT GMBH, 51580 Reichshof-Wehnrath (DE)
(72) Erfinder: FURTER, Urs, CH-1845 Noville (CH); SULIGOJ, Eric, CH-1020 Renens (CH)
(74) Vertreter: COHAUSZ & FLORACK
(86) Internationale Anmeldenummer: PCT/EP2001/001567
(87) Internationale Veröffentlichungsnummer: WO 2001/061641

(56) Entgegenhaltungen:
- WO-A-94/09388
- WO-A-97/12263
- WO-A-99/26197
- DE-A- 19 812 636

## Beschreibung

Die vorliegende Erfindung bezieht sich auf eine Transponder-Vorrichtung zur Identifikation von Objekten gegenüber Einrichtungen, mit einem integrierten Schaltkreis, mit einem ersten Treiber und mit einem eine Schaltung aufnehmenden Träger, wobei der erste Treiber und der integrierte Schaltkreis auf einer ersten Oberfläche des Trägers aufgebracht sind, wobei eine Vielzahl von Kontaktstellen auf einer zweiten Oberfläche des Trägers aufgebracht sind und wobei die Kontaktstellen mit dem Schaltkreis und dem ersten Treiber elektrisch verbunden sind. Der die Schaltung aufnehmende Träger kann aus einer Schaltungsplatine, einer verkapselten Schaltung oder einem beliebigen anderen eine Schaltung aufnehmenden Material sowie einer Mischform dieser gebildet sein.

Bei heutigen, hausintern bekannten Transpondern ist es üblich, daß ein Treiber, vorzugsweise eine Antenne, mit dem integrierten Schaltkreis zusammen verkapselt ist. Die Verkapselung bewirkt, daß die Antenne und der integrierte Schaltkreis von außerhalb der Verkapselung elektrisch nicht mehr kontaktierbar sind. Die Funktionen, die auf dem integrierten Schaltkreis zur Verfügung stehen, sind ausschließlich von der Antenne nutzbar. Die Antenne in Verbindung mit dem integrierten Schaltkreis ist ein rein passives System, welches durch ein externes Hochfrequenzfeld aktiviert wird. Der integrierte Schaltkreis bezieht seine Energie aus dem Hochfrequenzfeld der Umwelt mit Hilfe der Antenne. Mit Hilfe dieser Energie wird vom integrierten Schaltkreis ein Signal erzeugt, welches wiederum durch die Antenne ausgesendet wird.

Solch ein herkömmlicher Transponder ist auch aus der DE 196 28 802 A1 bekannt. Der darin beschriebene Transponder ist mit zwei Antennenspulen verbunden. Die Antennenspulen sind über eine Kontaktfläche mit einem integrierten Schaltkreis verbunden. Der integrierte Schaltkreis ist bei diesem Transponder jedoch nicht verkapselt und somit gegenüber Umwelteinflüssen ungeschützt.

Auch aus der DE 197 53 619 ist ein Tranponder bekannt, der zwei Antennen aufweist, die gemeinsam auf einen integrierten Schaltkreis zugreifen. Jedoch ist auch hier der integrierte Schaltkreis nicht mit einer Antenne verkapselt.

Die in DE 198 12 636 A beschriebene Verbindungsanordnung betrifft eine Chipkarte mit einem auf einem Modul befindlichen Halbleiter, der in einer Ausnehmung eines Kartenträgers, unter Erhalt einer elektrischen Verbindung, angeordnet ist. Das Modul weist einen Halbleiterchip auf und kann elektrisch nicht unmittelbar, sondern lediglich mittelbar mit dem Kartenträger in Verbindung gebracht werden. Zur Herstellung einer kontaktlosen Verbindung zwischen Halbleiterchip und der Umgebung wird eine induktive oder kapazitive Kopplung vorgeschlagen.

Schließlich zeigt auch WO 99 26197A einen Schaltungsträger, der zusammen mit einem Halbleiterchip und einer Spulenanordnung verkapselt ist und lediglich über die Kontaktflächen von außen kontaktierbar ist.

Doch wird die in dieser Schrift genannte zweite Spulenanordnung nicht über die äußeren Kontaktstellen mit dem Halbleiterchip verbunden, sondern ist in Serie mit der ersten Spulenanordnung geschaltet und mit dieser über Durchgangslöcher verbunden.

In heutigen Anwendungen ist es durchaus möglich, daß neben den passiven Transpondern auch aktive Elemente benötigt werden. Diese aktiven Elemente weisen zumeist eine Antenne auf, die von einem zweiten integrierten Schaltkreis betrieben wird. Diese sogenannten Transmitter beziehen ihre Energie aus einer in der Vorrichtung vorhandenen Energiequelle und senden über die Antenne ein Signal aus. Häufig muß sowohl das vom Transponder ausgesendete Signal als auch das vom Transmitter ausgesendete Signal codiert werden. Bei der Codierung werden Signale aus Ihrem Signalraum in einen zweiten Signalraum gewandelt. Dies ist insbesondere dann notwendig, wenn Signale verschlüsselt werden. Bei der Verschlüsselung werden die Signale mit Hilfe eines mehr oder weniger komplexen Transformationsalgorithmus in Signale umgewandelt, die ohne den entsprechenden Entschlüsselungsschlüssel nicht, oder nur mit großem Aufwand wieder in die ursprüngliche Form gebracht werden können. Dies ist regelmäßig dann der Fall, wenn mit Hilfe der Signale sicherheitsrelevante Informationen übertragen werden. Zur Codierung müssen die integrierten Schaltkreise im Transponder als auch im Transmitter einen Codierungs-Algorithmus zur Verfügung stellen, mit dessen Hilfe das informationstragende Signal codiert wird.

Da der Codierungs-Algorithmus im Transponder als auch im Transmitter häufig der gleiche ist, ist es bei bekannten Transponder-Vorrichtungen nachteilig, daß sie zwei integrierte Schaltkreise aufweisen müssen. Dies ist zwingend erforderlich, da der integrierte Schaltkreis im Transponder von außerhalb der Verkapselung elektrisch nicht kontaktierbar ist und somit seine Funktionen nicht von außerhalb der Verkapselung nutzbar sind. Ein weiterer Nachteil ergibt sich im folgenden derart, daß aufgrund der zwei benötigten integrierten Schaltkreise die Größe und die Kosten der gesamten Vorrichtung erheblich steigen.

Die Erfindung stellt sich somit die Aufgabe, eine Transponder-Vorrichtung zur Verfügung zu stellen, bei welcher der integrierte Schaltkreis des Transponders von außerhalb der Verkapselung und mehrfach nutzbar ist.

Die zuvor hergeleitete und aufgezeigte Aufgabe wird durch die Merkmale des Ansprucls 1 gelöst. Der integrierte Schaltkreis und der erste Treiber sind mit dem Träger derart verkapselt, daß der integrierte Schaltkreis und der erste Treiber von außerhalb der Verkapselung elektrisch ausschließlich über die Kontaktstellen kontaktierbar sind, und daß der integrierte Schaltkreis ein erstes Signal für den ersten Treiber codiert. Der große Vorteil einer solchen Transponder-Vorrichtung ist, daß der integrierte Schaltkreis des Transponders mehrfach genutzt werden kann. Ein auf dem integrierten Schaltkreis des Transponders vorhandener Codierungs-Algorithmus kann sowohl für die Codierung des Transponder-Signals als auch für die Codierung eines von außen angelegten Signals, beispielsweise des Transmitter-Signals, genutzt werden. Es ist zusätzlich gewährleistet, daß der Transponder gegenüber Umwelteinflüssen durch die Verkapselung geschützt ist.

Es ist Vorteilhaft, daß ein zweiter Treiber außerhalb der Verkapselung angeordnet ist daß der integrierte Schaltkreis ein zweites Signal für den zweiten Treiber codiert und daß das zweite Signal über die Kontaktflächen zur zweiten Antenne gelangt. Über die Kontaktstellen kann das codierte Signal dem zweiten Treiber zugeführt und ausgesendet werden. Durch die mehrfache Nutzung des integrierten Schaltkreises ergeben sich enorme Kostenvorteile gegenüber einer Vorrichtung mit zwei integrierten Schaltkreisen. Zusätzlich wird die Größe der gesamten Transponder-Vorrichtung erheblich verkleinert, da der Platz eines zweiten integrierten Schaltkreises eingespart werden kann.

Um ein erstes und/oder ein zweites Signal über eine Luftschnittstelle aussenden zu können, wird vorgeschlagen, daß der erste und/oder der zweite Treiber als Antenne ausgestaltet sind.

Durch die Kontaktflächen ist es möglich, daß eine Treiberschaltung ein Trägersignal erzeugt, daß das Trägersignal über die Kontaktflächen zum integrierten Schaltkreis gelangt und daß der integrierte Schaltkreis aus dem Trägersignal das zweite Signal erzeugt. Das bedeutet, daß das von der Treiberschaltung erzeugte Trägersignal zunächst über die Kontaktflächen dem integrierten Schaltkreis zugeführt wird, daß in dem integrierten Schaltkreis dieses Trägersignal mit Hilfe des auf dem integrierten Schaltkreises vorhandenen Verschlüsselungs-Algorithmus codiert wird und daß dieses codierte Signal über die Kontaktflächen an den zweiten Treiber, beispielsweise eine zweite Antenne, weitergeleitet wird.

Neben dem Codierungs-Algorithmus können auf dem integrierten Schaltkreis Ablaufsteuerungen programmiert werden, mit deren Hilfe z.B. eine Zustandsanzeige, insbesondere eine Leuchtdiode, angesteuert wird. Die auf dem integrierten Schaltkreis zur Verfügung stehenden Ablaufsteuerungen werden derart angesteuert, daß mindestens ein von außerhalb der Verkapselung angeordneter Schalter mit dem integrierten Schaltkreis über die Kontaktflächen verbunden ist und daß die Schalterposition das Verhalten des integrierten Schaltkreises beeinflußt. Über die Schalter wird auch der Aktivierungszustand der Transponder-Vorrichtung gesteuert. Nachdem ein Schalter gedrückt worden ist, wird die Ablaufsteuerung aktiviert, woraufhin z.B. vorher vorgegebene Signale vom Transmitter ausgesendet werden. Dies geschieht derart, daß der integrierte Schaltkreis in Abhängigkeit von der Position des Schalters einen Ablauf von Funktionen innerhalb der Transponder-Vorrichtung steuert, wobei der integrierte Schaltkreis Elemente außerhalb der Verkapselung über die Kontaktflächen ansteuert.

Obwohl für das vom Transmitter ausgesendete Signal als auch für das vom Transponder ausgesendete Signal der gleiche Codierungs-Algorithmus genutzt wird, ist es von Vorteil, daß für die beiden Signale verschiedene Schlüssel genutzt werden. Dies wird dadurch gewährleistet, daß der integrierte Schaltkreis das erste und das zweite Signal mit einem gleichen Codierungs-Algorithmus codiert, wobei eine Codierschlüssel für das erste Signal sich von einem Codierschlüssel für das zweite Signal unterscheidet.

Die außerhalb der Verkapselung angeordneten Statusanzeigen werden durch den integrierten Schaltkreis über die Kontaktflächen angesteuert. Der Benutzer hat durch die Statusanzeigen eine Information über den jeweiligen Status der Transponder-Vorrichtung.

Zur Vermeidung von Interferenzen zwischen den Signalen und zur Gewährleistung einer normalen Transponderfunktion ist die Transponder-Vorrichtung derart ausgestaltet, daß die erste Antenne auf einer Frequenz im kHz-Bereich sendet und daß die zweite Antenne auf einer Frequenz im MHz-Bereich sendet.

Zur einfacheren Kontaktierung zwischen der außerhalb der Verkapselung angeordneten Bauelementen und den innerhalb der Verkapselung angeordneten Bauelementen wird vorgeschlagen, daß die Kontaktstellen als eingebaute Grid-Array ausgebildet sind.

Zur Codierung des Transmitter-Signals benötigt der in der Verkapselung befindliche integrierte Schaltkreis Energie. Eine Möglichkeit, den integrierten Schaltkreis mit Energie zu versorgen, zeichnet sich dadurch aus, daß eine Energieversorgung außerhalb der Verkapselung angeordnet ist und daß die Energieversorgung mit dem integrierten Schaltkreis über die Kontaktflächen verbunden ist. Eine außerhalb der Verkapselung angeordnete Batterie, insbesondere eine Knopfbatterie, versorgt den integrierten Schaltkreis über die Kontaktflächen mit Energie. Dadurch ist gewährleistet, daß der integrierte Schaltkreis auch außerhalb eines Hochfrequenzfeldes, welches den Transponder mit Energie versorgt, ein Signal codieren kann.

Zur Speicherung von Feldenergie, welche durch das Hochfrequenzfeld dem Transponder zur Verfügung gestellt wird, wird vorgeschlagen, daß eine Kapazität zusätzlich zum integrierten Schaltkreis und zum Treiber mit dem Träger verkapselt ist und daß die Kapazität von außerhalb der Verkapselung elektrisch ausschließlich über die Kontaktstellen kontaktierbar ist.

Es hat sich gezeigt, daß eine vorteilhafte Bemaßung der Transponder-Vorrichtung sich dadurch kennzeichnet, daß der Träger mit den verkapselten Bauelementen eine Höhe von 1 bis 10 mm, eine Breite von 3 bis 20 mm und eine Länge von 5 bis 30 mm aufweist.

Die Verkapselung der Bauelemente auf dem Träger wird vorteilhaft mit einer Polycarbonat-Verbindung oder einer Epoxidharz-Verbindung gewährleistet. Diese Verbindungen dienen dem Schutz des Transponders gegenüber Umwelteinflüssen.

Um die Transponder-Vorrichtung an die Wünsche der jeweiligen Benutzer anzupassen und individuelle Ablaufsteuerungen zu speichern, sowie zur Speicherung eines Übertragungsverfahrens, einer Übertragungsgeschwindigkeit und von Codierungsparametern und ähnlichem wird vorgeschlagen, daß der integrierte Schaltkreis einen Speicher aufweist, wobei der Speicher Daten aufnimmt. Der Speicher kann beispielsweise ein EEPROM-Speicher sein, der elektrisch auslesbar und beschreibbar ist. Außerdem wird vorgeschlagen, daß der Speicher über eine Luftschnittstelle programmierbar ist. Dies gewährleistet eine hohe Flexibilität der Transponder-Vorrichtung.

Aufgrund der kleinen Bauweise der Transponder-Vorrichtung ist es möglich und wird vorgeschlagen, daß die Transponder-Vorrichtung in einem Schlüssel integriert ist.

Die Erfindung wird im folgenden anhand einer Zeichnung näher erläutert.

Dabei zeigt:
- Fig. 1: ein Blockschaltbild einer erfindungsgemäßen Transponder-Vorrichtung,
- Fig. 2 und: eine Draufsicht eines verkapselten Transponders,
- Fig. 3: eine Seitenansicht eines verkapselten Transponders.

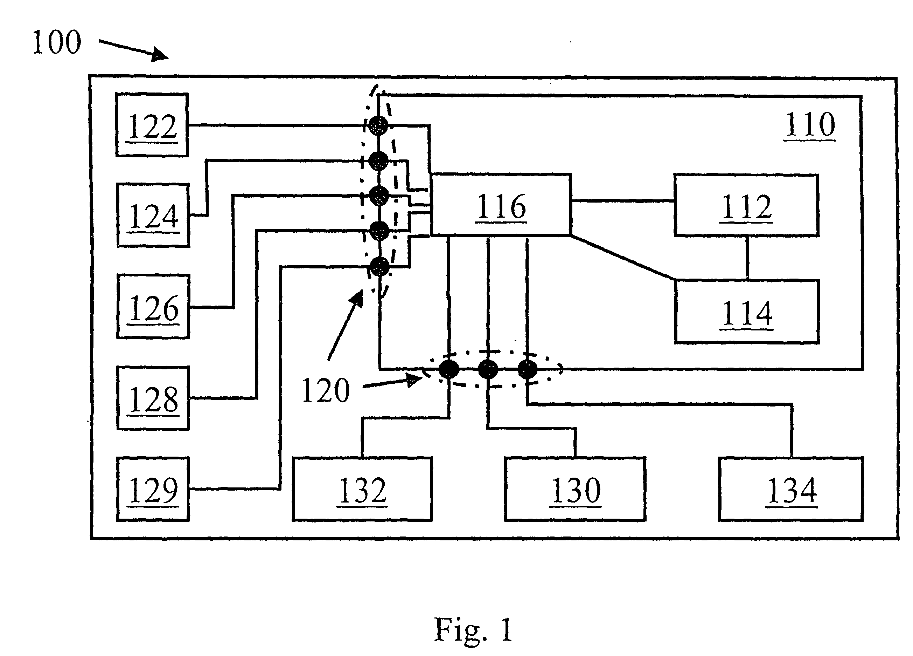

Die Transponder-Vorrichtung 100, welche in Fig. 1 als Blockschaltbild dargestellt ist, besteht aus einem verkapselten Transponder 110. In dem verkapselten Transponder 110 ist eine Antenne 112, ein Kondensator 114 und ein integrierter Schaltkreis 116 angeordnet. Die Antenne 112 bezieht ihre Energie aus einem Hochfrequenzfeld, welches in der Umgebung des Transponders vorhanden sein kann. Diese Energie kann in dem Kondensator 114 für kurze Zeit gespeichert werden. Bei einem vorhandenen Hochfrequenzfeld kann die in dem Kondensator 114 gespeicherte Energie dazu genutzt werden, daß in dem integrieren Schaltkreis 116 ein Signal codiert wird, welches wiederum über die Antenne 112 ausgesendet wird. Die Kontaktstellen 120 ermöglichen eine Kontaktierung des integrierten Schaltkreises 116 durch Bauelemente 122-134, welche außerhalb der Verkapselung angeordnet sind. Eine Energiequelle 132, z.B. eine Batterie, speist den integrierten Schaltkreis 116 mit Energie, selbst wenn der Transponder 110 nicht in einem Hochfrequenzfeld ist. Durch diese Energie kann ein Signal, welches von einer Treiberschaltung 130 dem integrierten Schaltkreis 116 über eine Kontaktfläche 120 zugeführt wird, codiert werden. Das codierte Signal kann durch die Treiberschaltung 130 über eine weitere Kontaktfläche 120 vom integrierten Schaltkreis 116 abgefragt werden. Nachdem das Signal codiert worden ist, wird dieses über einen Treiber, der beispielsweise als Antenne 134 gebildet ist, ausgesendet. Hierdurch kann z.B. ein Identifikationssignal zu einer Einrichtung (nicht dargestellt), z.B. einem Kraftfahrzeug, gesendet werden. Durch die Codierung mit Hilfe des integrierten Schaltkreises 116 wird gewährleistet, daß der Identifikationscode nicht von Unbefugten abgefragt werden kann. Die Funktionen des integrierten Schaltkreises 116 können über die Schalter 126, 128, 129 beeinflußt werden. Dazu werden die Schalterpositionen über Kontaktflächen 120 vom integrierten Schaltkreis 116 abgefragt. In Abhängigkeit vom Zustand des integrierten Schaltkreises 116 und von den Schalterpositionen der Schalter 126, 128, 129 werden Statusanzeigen 122, 124 vom integrierten Schaltkreis 126 angesteuert. Dies geschieht wiederum über die Kontaktstellen 120. Durch die Statusanzeigen 122,124 hat der Benutzer einen Überblick über die momentan in dem integrierten Schaltkreis 116 ablaufenden Funktionen. Dadurch, daß der integrierte Schaltkreis 116 sowohl für die Antenne 112 als auch für die Antenne 134 erreichbar ist, kann der integrierte Schaltkreis 116 die von den Antennen 112, 134 ausgesendeten Signale mit einem Codierungs-Algorithmus codieren.

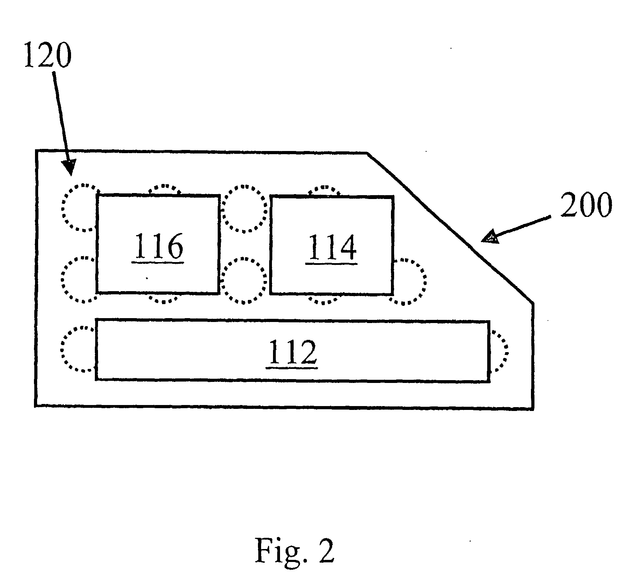

Die in Fig. 2 dargestellte Schaltungsplatine 200 weist eine Breite von 6,1 mm und eine Länge von 12,1 mm auf. Auf der Schaltungsplatine sind der integrierte Schaltkreis 116, der Kondensator 114 und die Antenne 112 aufgebracht. Die Kontaktstellen 120 sind in Fig. 2 als gestrichelte Kreise zu erkennen.

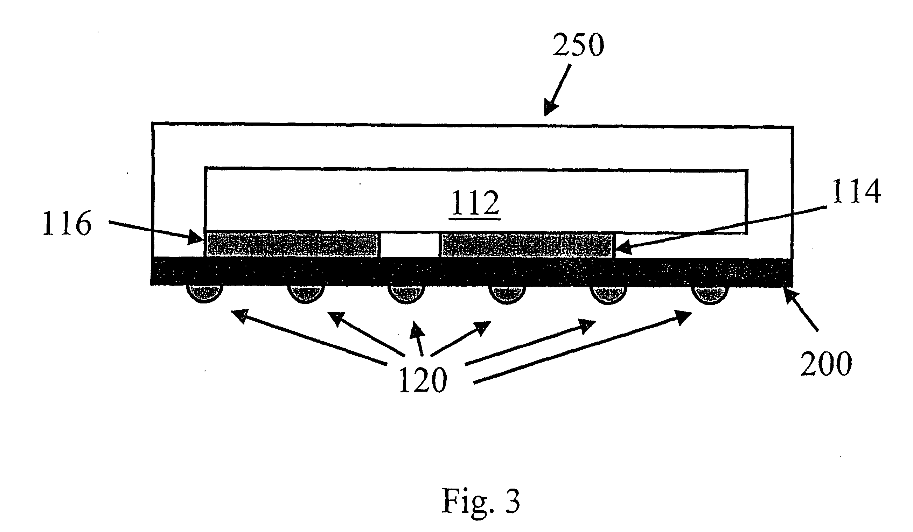

In Fig. 3 ist eine Seitenansicht des Transponders 110 zu erkennen. Der verkapselte Transponder 250 weist eine Höhe von 3 mm auf. Die Schaltungsplatine 200 ist mit den Kontaktstellen 120 beaufschlagt. Die Antenne 112, der integrierte Schaltkreis 116 und der Kondensator 114 sind über die Kontaktstellen 120 von außerhalb der Verkapselung 250 elektrisch kontaktierbar. Die elektrische Kontaktierung des integrierten Schaltkreises 116 ermöglicht eine gemeinsame Nutzung der Funktionen des integrierten Schaltkreises 116 durch sowohl die Antenne 112 als auch die Antenne 134.

## Patentansprüche

1. Transponder-Vorrichtung zur Identifikation von Objekten gegenüber Einrichtungen,
- mit einem integrierten Schaltkreis (116),
- mit einem ersten Treiber (112) und
- mit einem eine Schaltung aufnehmenden Träger (200),
- wobei der erste Treiber (112) und der Schaltkreis (116) auf einer ersten Oberfläche des Trägers (200) aufgebracht sind,
- wobei eine Vielzahl von Kontaktstellen (120) auf einer zweiten Oberfläche des Trägers (200) aufgebracht sind,
- wobei die Kontaktstellen (120) mit dem integrierten Schaltkreis (116) und dem ersten Treiber.(112) elektrisch verbunden sind,
- wobei der integrierte Schaltkreis (116) und der erste Treiber (112) mit dem Träger (200) derart verkapselt sind, daß mindestens der integrierte Schaltkreis (116) von außerhalb der Verkapselung elektrisch ausschließlich über die Kontaktstellen (120) kontaktierbar ist,
**dadurch gekennzeichnet,**
- **daß** der integrierte Schaltkreis (116) zum Codieren eines ersten Signals für den ersten Treiber (112) gebildet ist,
- **daß** ein zweiter außerhalb der Verkapselung angeordneter Treiber (134) ausgebildet ist,
- **daß** der integrierte Schaltkreis (116) zum Codieren eines zweiten Signals für den zweiten Treiber (134) gebildet ist, und
- **daß** der zweite Treiber (134) mit dem integrierten Schaltkreis (116) über die Kontaktflächen (120) elektrisch verbunden ist zum Übertragen des zweiten Signals zwischen integriertem Schaltkreis (116) und zweiten Treiber (134).

2. Transponder-Vorrichtung nach Anspruch 1,
**dadurch gekennzeichnet, daß**
der integrierte Schaltkreis (116) und der erste Treiber (112) von außerhalb der Verkapselung elektrisch ausschließlich über die Kontaktstellen (120) kontaktierbar sind.

3. Transponder-Vorrichtung nach einem der Ansprüche 1 oder 2,
**dadurch gekennzeichnet, daß**
der erste und/oder zweite Treiber (112, 134) als Antenne ausgestaltet sind.

4. Transponder-Vorrichtung nach einem der Ansprüche 1 bis 3,
**dadurch gekennzeichnet, daß** eine Treiberschaltung (130) zum Erzeugen eines Trägersignals vorgesehen ist, daß die Treiberschaltung mit dem integrierten Schaltkreis (116) über die Kontaktflächen (120) verbunden ist zum Übertragen des Trägersignals und daß der integrierte Schaltkreis (116) zum Erzeugen des zweiten Signals aus dem Trägersignal gebildet ist.

5. Transponder-Vorrichtung nach einem der Ansprüche 1 bis 4,
**dadurch gekennzeichnet, daß** mindestens ein von außerhalb der Verkapselung angeordneter Schalter (126, 128, 129) mit dem integrierten Schaltkreis (116) über die Kontaktflächen (120) verbunden ist und daß die Schalterposition das Verhalten des integrierten Schaltkreises (116) beeinflußt.

6. Transponder-Vorrichtung nach einem der Ansprüche 1 bis 5,
**dadurch gekennzeichnet, daß** der integrierte Schaltkreis (116) in Abhängigkeit von der Position des Schalters (126, 128, 129) einen Ablauf.von Funktionen innerhalb der Transponder-Vorrichtung steuert, wobei der integrierte Schaltkreis (116)zum Ansteuern von Elementen außerhalb der Verkapselung über die Kontaktflächen (120) gebildet ist.

7. Transponder-Vorrichtung nach einem der Ansprüche 1 bis 6,
**dadurch gekennzeichnet, daß** der integrierte Schaltkreis (116) zum Codieren des ersten und des zweiten Signals mit einem gleichen Codierungs-Algorithmus gebildet ist, wobei ein Codierschlüssel für das erste Signal sich von einem Codierschlüssel für das zweite Signal unterscheidet.

8. Transponder-Vorrichtung nach einem der Ansprüche 1 bis 7,
**dadurch gekennzeichnet, daß** mindestens ein Statusanzeiger (122, 124) außerhalb der Verkapselung angeordnet ist und daß der integrierte Schaltkreis (116) zum Ansteuern des Statusanzeigers (122, 124) über die Kontaktflächen (120) gebildet ist.

9. Transponder-Vorrichtung nach einem der Ansprüche 4 bis 8,
**dadurch gekennzeichnet, daß** die erste Antenne (112) auf einer Frequenz im Kilohertz Bereich sendet und daß die zweite Antenne (134) auf einer Frequenz im Megahertz Bereich sendet.

10. Transponder-Vorrichtung nach einem der Ansprüche 1 bis 9,
**dadurch gekennzeichnet, daß** die Kontaktstellen (120) als ein Ball-Grid-Array ausgebildet sind.

11. Transponder-Vorrichtung nach einem der Ansprüche 1 bis 10,
**dadurch gekennzeichnet, daß** eine Energieversorgung (132) außerhalb der Verkapselung angeordnet ist und daß die Energieversorgung (132) mit dem integrierten Schaltkreis (116) über die Kontaktflächen (120) verbunden ist.

12. Transponder-Vorrichtung nach einem der Ansprüche 1 bis 11,
**dadurch gekennzeichnet, daß** eine Kapazität (114) zusätzlich zum integrierten Schaltkreis (116) und zum Treiber (112) mit der Schaltungsplatine (200) verkapselt ist und daß die Kapazität (114) von außerhalb der Verkapselung elektrisch ausschließlich über die Kontaktstellen (120) kontaktierbar ist.

13. Transponder-Vorrichtung nach einem der Ansprüche 1
**dadurch gekennzeichnet, daß** der Träger (200) mit den verkapselten Bauelementen (112, 114, 116) eine Höhe von 1 bis 10 mm, eine Breite von 3 bis 20 mm und eine Länge von 5 bis 30 mm aufweist.

14. Transponder-Vorrichtung nach einem der Ansprüche 1 bis 13,
**dadurch gekennzeichnet, daß** die Bauelemente (112, 114, 116) mit einer Polycarbonat-Verbindung verkapselt sind.

15. Transponder-Vorrichtung nach einem der Ansprüche 1 bis 13,
**dadurch gekennzeichnet, daß** die Bauelemente (112, 114, 116) mit einer Epoxidharz-Verbindung verkapselt sind.

16. Transponder-Vorrichtung nach einem der Ansprüche 1 bis 15,
**dadurch gekennzeichnet, daß** der integrierte Schaltkreis (116) einen Speicher (EEPROM) aufweist, wobei der Speicher Daten aufnimmt.

17. Transponder-Vorrichtung nach einem der Ansprüche 1 bis 16,
**dadurch gekennzeichnet, daß** der Speicher über eine Luftschnittstelle programmierbar ist.

18. Transponder-Vorrichtung nach einem der Ansprüche 1 bis 15,
**dadurch gekennzeichnet, daß** die Transponder-Vorrichtung in einen Schlüssel integriert ist.

## Claims

1. A transponder device for identifying objects vis-à-vis devices
• comprising an integrated circuit (116);
• comprising a first driver (112); and
• comprising a carrier (200) which accommodates a circuit arrangement;
• wherein the first driver (112) and the integrated circuit (116) have been applied to a first surface of the carrier (200);
• wherein a multitude of contact positions (120) have been applied to a second surface of the carrier (200);
• wherein the contact positions (120) are electrically connected to the integrated circuit (116) and the first driver (112);
• wherein the integrated circuit (116) and the first driver (112) are encapsulated in the carrier (200) such that at least the integrated circuit (116) can be electrically contacted from outside the encapsulation exclusively by way of the contact positions (120),
**characterised in that**
• the integrated circuit (116) has been formed for coding a first signal for the first driver (112);
• that there is a second driver (134), arranged outside the encapsulation;
• that the integrated circuit (116) has been formed for coding a second signal for the second driver (134); and
• that the second driver (134) is electrically connected to the integrated circuit (116) by way of the contact areas (120) for transmitting the second signal between the integrated circuit (116) and the second driver (134).

2. The transponder device according to claim 1,
**characterised in that** the integrated circuit (116) and the first driver (112) can be electrically contacted from outside the encapsulation exclusively by way of the contact positions (120).

3. The transponder device according to one of claims 1 or 2,
**characterised in that** the first and/or the second driver (112, 134) are aerials/is an aerial.

4. The transponder device according to any one of claims 1 to 3,
**characterised in that** a driver circuit (130) for generating a carrier signal is provided; **in that** for the purpose of transmitting the carrier signal the driver circuit is connected to the integrated circuit (116) by way of the contact areas (120); and **in that** for generating the second signal the integrated circuit (116) is made from the carrier signal.

5. The transponder device according to any one of claims 1 to 4,
**characterised in that** at least one switch (126, 128, 129), arranged outside the encapsulation, is connected to the integrated circuit (116) by way of the contact surfaces (120); and **in that** the switch position influences the behaviour of the integrated circuit (116).

6. The transponder device according to any one of claims 1 to 5,
**characterised in that** depending on the position of the switch (126, 128, 129), the integrated circuit (116) controls a sequence of functions within the transponder device, wherein the integrated circuit (116) has been formed for addressing elements outside the encapsulation by way of the contact areas (120).

7. The transponder device according to any one of claims 1 to 6,
**characterised in that** the integrated circuit (116) comprises an identical coding algorithm for coding the first and the second signal, wherein the coding key for the first signal differs from the coding key for the second signal.

8. The transponder device according to any one of claims 1 to 7,
**characterised in that** at least one status indicator (122, 124) is arranged outside the encapsulation, and **in that** for addressing the status indicator (122, 124) the integrated circuit (116) has been formed by way of the contact areas (120).

9. The transponder device according to any one of claims 4 to 8,
**characterised in that** the first aerial (112) transmits at a frequency in the kilohertz range, while the second aerial (134) transmits at a frequency in the megahertz range.

10. The transponder device according to any one of claims 1 to 9,
**characterised in that** the contact positions (120) are designed in the form of a ball-grid array.

11. The transponder device according to any one of claims 1 to 10,
**characterised in that** the energy supply (132) is arranged outside the encapsulation, and **in that** the energy supply (132) is connected to the integrated circuit (116) by way of the contact areas (120).

12. The transponder device according to any one of claims 1 to 11,
**characterised in that** a capacity (114) in addition to the integrated circuit (116) and in addition to the driver (112) is encapsulated with the printed circuit board (200), and **in that** the capacity (114) is electrically contactable from outside the encapsulation exclusively by way of the contact positions (120).

13. The transponder device according to any one of claims 1 to 12,
**characterised in that** the carrier (200) with the encapsulated components (112, 114, 116) ranges from 1 to 10 mm in height, from 3 to 20 mm in width, and from 5 to 30 mm in length.

14. The transponder device according to any one of claims 1 to 13,
**characterised in that** the components (112, 114, 116) are encapsulated by means of a polycarbonate compound.

15. The transponder device according to any one of claims 1 to 13,
**characterised in that** the components (112, 114, 116) are encapsulated by means of an epoxy resin compound.

16. The transponder device according to any one of claims 1 to 15,
**characterised in that** the integrated circuit (116) comprises a memory (EEPROM), wherein the memory accommodates data.

17. The transponder device according to any one of claims 1 to 16,
**characterised in that** the memory is programmable by way of an air interface.

18. The transponder device according to any one of claims 1 to 15,
**characterised in that** the transponder device is integrated in a key.

## Revendications

1. Dispositif transpondeur pour l'identification d'objets par rapport à des dispositifs, comportant
- un circuit intégré (116),
- un premier étage d'attaque (112), et
- un support (200) qui reçoit un circuit,
- dans lequel le premier étage d'attaque (112) et le circuit (116) sont disposés sur une première surface du support (200),
- dans lequel une multiplicité de points de contact (120) sont disposés sur une seconde surface du support (200),
- dans lequel les points de contact (120) sont reliés électriquement au circuit intégré (116) et au premier étage d'attaque (112),
- dans lequel le circuit intégré (116) et le premier étage d'attaque (112) sont encapsulés avec le support (200) de telle sorte qu'un contact électrique peut être établi avec au moins le circuit intégré (116) à partir de l'extérieur de l'encapsulation, exclusivement par l'intermédiaire des points de contact (120),
**caractérisé en ce**
- **que** le circuit intégré (116) est formé pour le codage d'un premier signal pour le premier étage d'attaque (112),
- **qu'**un second étage d'attaque (134) est formé à l'extérieur de l'encapsulation,
- **que** le circuit intégré (116) est formé pour le codage d'un second signal pour le second étage d'attaque (134), et
- **que** le second étage d'attaque (134) est relié électriquement au circuit intégré (116) par l'intermédiaire des surfaces de contact (120) pour la transmission du second signal entre le circuit intégré (116) et le second étage d'attaque (134).

2. Dispositif transpondeur selon la revendication 1, **caractérisé en ce qu'**un contact électrique est établi avec le circuit intégré (116) du premier étage d'attaque (112) à partir de l'extérieur de l'encapsulation, exclusivement par l'intermédiaire des points de contact (120).

3. Dispositif transpondeur selon l'une des revendications 1 ou 2, **caractérisé en ce que** le premier et/ou le second étages d'attaque (112, 134) sont agencés sous la forme d'une antenne.

4. Dispositif transpondeur selon l'une des revendications 1 à 3, **caractérisé en ce qu'**il est prévu un circuit d'attaque (130) pour produire un signal de porteuse, que le circuit d'attaque est relié au circuit intégré (116) par l'intermédiaire des surfaces de contact (120) pour la transmission du signal de porteuse et que le circuit intégré (116) est formé pour la production du second signal à partir du signal de porteuse.

5. Dispositif transpondeur selon l'une des revendications 1 à 4, **caractérisé en ce qu'**au moins un commutateur (126, 128, 129) disposé à l'extérieur de l'encapsulation est relié au circuit intégré (116) par l'intermédiaire des surfaces de contact (120) et que la position des commutateurs influe sur le comportement du circuit intégré (116).

6. Dispositif transpondeur selon l'une des revendications 1 à 5, **caractérisé en ce que** le circuit intégré (116) commande, en fonction de la position du commutateur (127,128,129), un déroulement de fonctions à l'intérieur du dispositif transpondeur, le circuit intégré (116) étant formé pour la commande d'éléments à l'extérieur de l'encapsulation, par l'intermédiaire des surfaces de contact (120).

7. Dispositif transpondeur selon l'une des revendications 1 à 6, **caractérisé en ce que** le circuit intégré (116) est formé pour le codage des premier et second signaux avec un algorithme de codage identique, auquel cas une clé de codage pour le premier signal diffère d'une clé de codage pour le second signal.

8. Dispositif transpondeur selon l'une des revendications 1 à 7, **caractérisé en ce qu'**au moins un dispositif d'affichage d'état (122, 124) est disposé à l'extérieur de l'encapsulation et que le circuit intégré (116) est formé pour commander le dispositif d'affichage d'état (122,124) au moyen des surfaces de contact (120).

9. Dispositif transpondeur selon l'une des revendications 4 à 8, **caractérisé en ce que** la première antenne (112) émet à une fréquence dans la gamme des kilohertz et que la seconde antenne (134) émet à une fréquence dans la gamme des mégahertz.

10. Dispositif transpondeur selon l'une des revendications 1 à 9, **caractérisé en ce que** les points de contact (120) sont réalisés sous la forme d'un réseau Ball-Grid.

11. Dispositif transpondeur selon l'une des revendications 1 à 10, **caractérisé en ce qu'**une unité d'alimentation en énergie (132) est disposée à l'extérieur de l'encapsulation et que l'unité d'alimentation en énergie (132) est reliée au circuit intégré (116) par l'intermédiaire des surfaces de contact (120).

12. Dispositif transpondeur selon l'une des revendications 1 à 11, **caractérisé en ce qu'**une capacité (114) est encapsulée en plus du circuit intégré (116) et de l'étage d'attaque (112) avec la platine de circuit (200) et qu'un contact électrique peut être établi avec la capacité (114) à partir de l'extérieur de l'encapsulation, exclusivement par l'intermédiaire des points de contact (120).

13. Dispositif transpondeur selon l'une des revendications 1 à 12, **caractérisé en ce que** le support (200) équipé des composants encapsulés (112, 114, 116), possède une hauteur de 1 à 10 mm, une largeur de 3 à 20 mm et une longueur de 5 à 30 mm.

14. Dispositif transpondeur selon l'une des revendications 1 à 13, **caractérisé en ce que** les composants (112,114,116) sont encapsulés avec un composé de polycarbonate.

15. Dispositif transpondeur selon l'une des revendications 1 à 13, **caractérisé en ce que** les composants (112,114,116) sont encapsulés avec un composé formé d'une résine époxy.

16. Dispositif transpondeur selon l'une des revendications 1 à 15, **caractérisé en ce que** le circuit intégré (116) comporte une mémoire (EEPROM), la mémoire recevant des données.

17. Dispositif transpondeur selon l'une des revendications 1 à 16, **caractérisé en ce que** la mémoire est programmable au moyen d'une interface dans l'air.

18. Dispositif transpondeur selon l'une des revendications 1 à 15, **caractérisé en ce que** le dispositif transpondeur est intégré dans une clé.
